# EUROPEAN PATENT SPECIFICATION

(11) **EP 0 335 906 B1**
(45) Date of publication and mention of the grant of the patent: **24.11.1993**
(21) Application number: 88900482.6
(22) Date of filing: 15.12.1987
(51) Int. Cl.: B65G 29/00, B65G 35/00

(54) **CONVEYOR TRACK ARRANGEMENT WITH OVERHEAD CARRIAGES**
SCHIENENFÖRDERANLAGE MIT HÄNGEBAHNWAGEN
AGENCEMENT DE VOIE DE CONVOYAGE AVEC CHARIOTS SUSPENDUS

(30) Priority: 15.12.1986 SE 8605379
(43) Date of publication of application: 11.10.1989
(73) Proprietor: OCS Overhead Conveyor System Aktiebolag, 502 47 Boras (SE)
(72) Inventor: CHRISTIANSSON, Carsten, S-502 49 Boras (SE)
(74) Representative: Rostovanyi, Peter
(86) International application number: SE8700605
(87) International publication number: WO8804641

(56) References cited:
- DE-A- 2 653 009
- DE-A- 3 218 012
- SE-B- 371 673
- SE-B- 444 407
- US-A- 3 164 104

## Description

The present invention relates to a conveyor track arrangement in accordance with the preamble of appended claim 1. An arrangement of this type is disclosed in DE-A-3,218,012.

There are several types of conveyor systems with overhead carriages hocked on a track and provided with inclined rollers which are in rolling and frictional contact with a normally tubular conveying shaft. The friction between the rollers and the rotating tube propels the carriages along fixed tracks. The carriages may have the shape of e.g. a basket for carrying products, or a hanger for articles of clothing or the like which are to be subjected to various manufacturing operations.

In these known conveyor systems, the carriages are moved by means of a rigid and relatively long conveyor tube which is caused to rotate by special driving means. The tracks included in the conveyor systems are open or closed and may have quite irregular shapes, for which reason it must be possible to change the direction of the tracks in various ways.

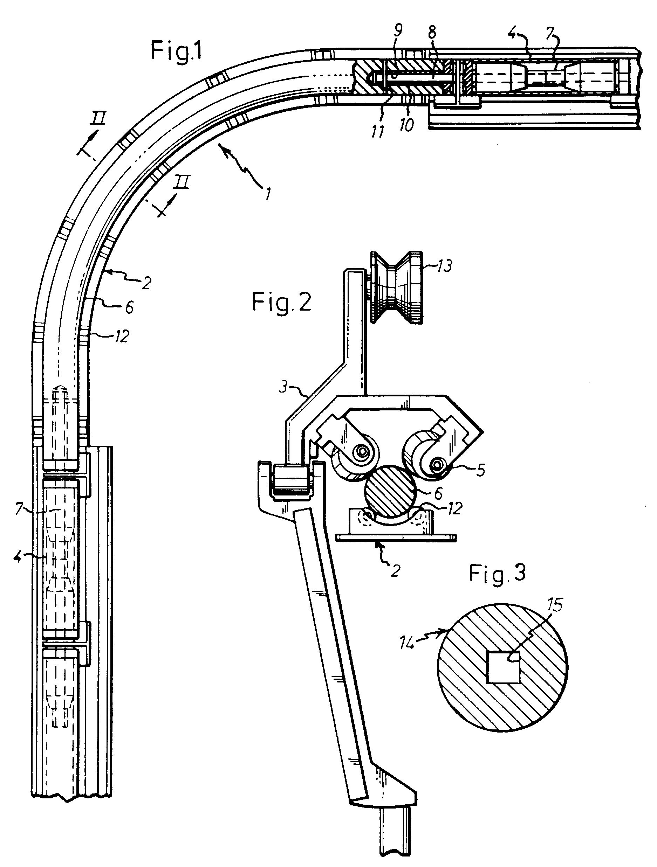

DE-A-2,653,009 discloses a device for moving objects along a guide rail in the form of a rotating shaft with which inclined rollers mounted on suspension means are in frictional contact (see Fig. 1). As appears from Figs 9-12, the device is mainly intended to be used for window curtains or draperies for partitioning a room. The shaft of this known device may have the shape of a plastic tube which forms a gently curved guide rail for the curtain (see Fig. 7). The device is an example of the prior art technique on which the present invention is based, but is not adapted to be used in a conveyor system with overhead carriages, where both straight and curved track sections for propelling the carriages are included.

The object of the invention is to eliminate the drawbacks discussed above and to provide a conveyor track arrangement which renders it possible to reduce the total costs of the carriage conveyor track and which provides for easy adjustment of said conveyor track after assembly.

These objects are achieved by means of an arrangement which is of the type described by way of introduction and which further has the features stated in the characterising clause of appended claim 1. Preferred embodiments of the invention are stated in the appended sub-claims.

According to a preferred embodiment, the flexible member is a polyurethane rubber tube, the two ends of which are connected to couplings for rotating the tube. Such a coupling which, for example, is of the type as described in Swedish patent 8008530-1 (SE-B-439 186), comprises a pin rigidly connected therewith, said pin being inserted and nonrotatably fastened in one end portion of the flexible tube.

Many advantages are obtained by means of the invention, one being the possibility of forming the conveyor track with very sharp curves. Practical tests have shown that 90° curves with a radius as small as 300 mm function quite satisfactorily.

The invention and its many advantages will be described in detail below, reference being made to the accompanying drawing illustrating a preferred embodiment of the inventive arrangement. Fig. 1 is a plan view, partly in section, or an arrangement according to the invention in the form of a driven curve. Fig. 2 is a cross-sectional view of the curve along line II-II in Fig. 1, with a carriage thereon. Fig. 3 is a cross-section of an alternatively designed rod included in the arrangement according to the invention.

Fig. 1 shows a part of a horizontal conveyor track as seen from above, generally designated 1 and comprising a driven 90° curve 2 through which an overhead carriage 3 carrying a load (not shown) is movable (see Fig. 2). The conveyor track 1 comprises shaft-like, straight track sections in the form of rigid tubes 4 which are rotated by driving means (not shown) so as to propel, in known manner, the carriage 3 by the frictional and rolling contact between the tubes 4 and inclined rollers 5 mounted on the carriage 3.

The curve 2, i.e. the curved track section, comprises a flexible member which in the drawing is shown as an elongate solid rod 6 which, however, may lust as well be tubular, and practical tests have demonstrated that the tubular form is the most advantageous one. The rod 6 preferably consists of polyurethane rubber or similar material.

The ends of the rubber rod 6 are rigidly connected to the coaxially positioned ends of the tubes 4. The tubes include per se known couplings 7 which are preferably of the type disclosed in SE 8008530-1 and therefore need not be here described in detail. For connecting the tubes 4 to the rubber rod 6, each coupling 7 comprises a pin 8 rigidly connected therewith and inserted into a hole 9 in the end portion of the rubber rod 6. The hole 9 also accommodates a reinforcement sleeve 10 which, like the pin 8, is provided with transverse bores into which a transverse locking pin 11 is inserted for nonrotatably fastening the pin 8 in the end portion of the rod 6. In this manner, the rubber rod 6 is rotatable by means of the straight tubes 4 via the couplings 7, such that the carriage 3 is driven from a straight track section, via the rotating rubber rod 6 over to the next straight track section. The speed of rotation is the same, and therefore the junction between the straight and the curved track sections presents no problem.

The curved section of the conveyor track 1 also comprises pairs of relatively small underlying ball bearings 12 which serve to support this section and are in rolling contact with the circumference of the flexible rotating rubber rod 6. It will be appreciated that the supporting function can also be achieved in other ways which, however, will not be here described.

As shown in Fig. 2, the carriage 3 also comprisesaan overlying, free rolling wheel 13 which - and this is somewhat outside the scope of this invention - can be switched off from the track and caused to roll on a fixed, nonrotatable rail or siding optionally included in the system, as discussed by way of introduction in the general part of the specification.

Fig. 3 is a cross-sectional view of a rod 14 which corresponds to the rod 6 as described above, but which has, as an alternative, a square hole 15 into which a pin (not shown) is insertable from the end to be fastened in the rod 14. The pin which corresponds to the pin 8 described above, has a shape conforming to the hole 15. The advantage obtained by this type of rod 14 and pin is than no further means is required for fastening the pin in the hole 15, hut the pin imparts a torque directly to the walls of the hole 15. It will be appreciated that the hole and the pin adapted thereto nay have a different polygonal cross-section.

The invention thus makes for a conveyor track in which the carriages on both curved and straight track sections are propelled by a rotating member. In this manner, the number of drive units for the track sections can be reduced, and thus the cost of the entire arrangement. Moreover, the junctions between the driven and the nondriven track sections are eliminated, which have been causing the difficulties mentioned by way of introduction. Of course, a curved track section can be connected directly to another curved track section.

Finally, it should be emphasised that the invention may be modified in many different ways within the scope of the appended claims. A person skilled in the art realises that the arrangement according to the invention may he positioned in different planes and be differently inclined, without departing from the inventive idea. Many other types of curves, either above or below 90°, can be provided.

A specific field of application is when the conveyor track is used for moving carriages between different floors. In this case, use is made of a relatively long, straight track section, corresponding to the tube 4, which is inclined between the floors and each end of which must have a minor angled portion comprising a flexible member and a coupling of the type described above. One condition that must be fulfilled in all cases is that the friction is sufficient between the different track sections and the inclined rollers of the carriage.

## Claims

1. A conveyor track arrangement with carriages (3) suspended on rotatable track-forming shafts and provided with rollers (5) which are in frictional and rolling contact with said shafts so as to propel said carriages (3) along said track (1) by rotation of the shaft, said track (1) comprising straight and, alternately, curved interconnected track sections (4, 6), the end portions of which are coaxial and rigidly interconnected with coupling means (7), said curved track sections being rotatable by means of at least one of the adjoining track sections (4), **characterised** in that each of said curved track sections comprises a round elongate, flexible and solid or tubular rod (6; 14) having a smooth circumference and forming a sharp curve, preferably a 90° curve, and that said coupling means (7) comprise a pin (8) rigidly connected therewith, said pin being inserted and nonrotatably fastened in one end portion of said flexible rod (6; 14).

2. An arrangement as claimed in claim 1, wherein said rod (6; 14) consists of rubber or similar material.

3. An arrangement as claimed in claim 1 or 2, wherein said flexible rod (6; 14) is supported by a plurality of roller bearings (12) which are in rolling contact with the circumference of said rod (6; 14).

4. Arrangement as claimed in any one of the preceding claims, wherein said rod (14) comprises, at each end portion, a hole (15) which is polygonal in cross-section and into which said pin having the same cross-sectional shape is inserted.

## Patentansprüche

1. Förderbahnanordnung mit Wagen (3), die an drehbaren, bahnbildenden Wellen aufgehängt und mit Rollen (5) versehen sind, welche mit den genannten Wellen in reibschlüssigem und rollendem Eingriff stehen, um durch Drehen der Welle die Wagen (3) längs der Bahn (1) anzutreiben, wobei die Bahn (1) wechselweise gerade und gekrümmte, miteinander verbundene Bahnteile (4, 6) umfasst, deren Endabschnitte koaxial und mit Kupplungsmitteln (7) starr verbunden sind, wobei die gekrümmten Bahnteile mittels zumindest eines der angrenzenden Bahnteile (4) drehbar sind, dadurch **gekennzeichnet**, dass jeder der gekrümmten Bahnteile einen runden, langgestreckten, biegsamen und massiven oder rohrförmigen Stab (6; 14) umfasst, der einen ebenen Umfang aufweist und eine stark gekrümmte Kurve, vorzugsweise eine 90°-Kurve, bildet, und dass die Kupplungsmittel (7) einen fest damit verbundenen Zapfen (8) aufweisen, der in dem einen Endabschnitt des biegsamen Stabs (6; 14) eingesteckt und drehfest angebracht ist.

2. Anordnung nach Anspruch 1, worin der genannte Stab (6;14) aus Gummi oder ähnlichem Material besteht.

3. Anordnung nach Anspruch 1 oder 2, worin der biegsame Stab (6; 14) von einer Vielzahl Rollenlager (12) getragen ist, die mit dem Umfang des Stabs (6;14) in rollendem Eingriff stehen.

4. Anordnung nach einem der vorhergehenden Ansprüche, worin der genannte Stab (14) an jedem Endabschnitt ein Loch (15) aufweist, das vieleckigen Querschnitt hat und in welchem der genannte Stift derselben Querschnittsform eingesteckt ist.

## Revendications

1. Agencement de voie de convoyage avec des chariots (3) qui sont suspendus à des arbres rotatifs formant un chemin et qui sont munis de rouleaux (5) étant en contact de friction et de roulement avec lesdits arbres afin de propulser les chariots (3) le long dudit chemin (1) par rotation de l'arbre, ledit chemin (1) comprenant des tronçons (4, 6) droits et courbés en alternance qui sont reliés entre eux et dont les parties d'extrémité sont coaxiales et reliées de façon rigide l'une à l'autre par des moyens d'accouplement (7), les tronçons de chemin courbés pouvant être tournés au moyen d'un au moins des tronçons (4) avoisinants, **caractérisé** en ce que chacun des troncons de chemin courbés comporte une barre (6; 14) ronde, allongée, flexible et massive ou tubulaire, qui a une circonférence lisse et forme une courbe prononcée, de préférence une courbe de 90°, et en ce que les moyens d'accouplement (7) comportent un goujon (8) y relié de façon rigide et inséré et fixé de façon solidaire à la rotation dans une partie d'extrémité de ladite barre flexible (6; 14).

2. Agencement selon la revendication 1, dans lequel ladite barre (6; 14) est réalisée en caoutchouc ou analogue.

3. Agencement selon la revendication 1 ou 2, dans lequel ladite barre flexible (6; 14) est supportée par plusieurs paliers à rouleaux (12) en contact de roulement avec la circonférence de ladite barre (6; 14).

4. Agencement selon l'une quelconque des revendications précédentes, dans lequel ladite barre (14) comporte, à chaque partie d'extrémité, un trou (15) qui est polygonal en coupe transversale et dans lequel est inséré ledit goujon ayant la même forme en coupe transversale.
